# EUROPÄISCHE PATENTSCHRIFT

(11) **EP 4 295 237 B1**
(45) Veröffentlichungstag und Bekanntmachung des Hinweises auf die Patenterteilung: **14.05.2025**
(21) Anmeldenummer: 22713280.0
(22) Anmeldetag: 25.01.2022
(51) Int. Cl.: G06F 13/42, H04L 67/52, G06F 9/445, G06F 8/61, B60R 16/023, B60K 35/00, H04L 12/423, G06F 12/06, H04L 12/403, H04L 61/5092, H04L 61/5038, H04L 41/08, H04L 12/40, G06F 13/40, H04L 67/12

(54) **KRAFTFAHRZEUG MIT MEHREREN STEUERGERÄTEN, WELCHE UNTERSCHIEDLICHE FAHRZEUGFUNKTIONEN IN DEM KRAFTFAHRZEUG BEREITSTELLEN, SOWIE VERFAHREN ZUM KONFIGURIEREN DER STEUERGERÄTE UND STEUERGERÄT**
MOTOR VEHICLE HAVING A PLURALITY OF CONTROL DEVICES WHICH PROVIDE DIFFERENT VEHICLE FUNCTIONS IN THE MOTOR VEHICLE AND METHOD FOR CONFIGURING THE CONTROL DEVICES AND CONTROL DEVICE
VÉHICULE À MOTEUR DOTÉ D'UNE PLURALITÉ DE DISPOSITIFS DE COMMANDE QUI FOURNISSENT DIFFÉRENTES FONCTIONS DE VÉHICULE DANS LE VÉHICULE À MOTEUR ET PROCÉDÉ DE CONFIGURATION DES DISPOSITIFS DE COMMANDE ET DISPOSITIF DE COMMANDE

(30) Priorität: 17.02.2021 DE 102021103757
(43) Veröffentlichungstag der Anmeldung: 27.12.2023
(73) Patentinhaber: Bayerische Motoren Werke Aktiengesellschaft, 80809 München (DE)
(72) Erfinder: RÖLLE, Christopher, 82194 Gröbenzell (DE); SIFFERLINGER, Anton, 80333 München (DE)
(86) Internationale Anmeldenummer: PCT/EP2022/051526
(87) Internationale Veröffentlichungsnummer: WO 2022/175026

(56) Entgegenhaltungen:
- WO-A1-2010/074677
- WO-A1-2010/147516
- WO-A1-2017/024226

## Beschreibung

Die Erfindung betrifft ein Kraftfahrzeug mit mehreren Steuergeräten, welche dazu eingerichtet sind, eine jeweilige Fahrzeugfunktion in dem Kraftfahrzeug bereitzustellen, wobei die Fahrzeugfunktionen der Steuergeräte unterschiedlich sind. Die Steuergeräte sind durch eine gemeinsame Busleitung verbunden, um sie beispielsweise ansteuern zu können, damit sie ihre Fahrzeugfunktion ausführen. Zu der Erfindung gehören auch ein entsprechendes Steuergerät für ein Kraftfahrzeug sowie ein Verfahren zum Konfigurieren von Steuergeräten in einem Kraftfahrzeug, damit die Steuergeräte eine jeweilige Fahrzeugfunktion einrichten oder bereitstellen, damit sie ausgeführt werden kann.

Aktuell haben Fahrzeuge eineindeutig identifizierte Steuergeräte, indem bei der Herstellung der Steuergeräte beispielsweise eine geräteindividuelle fortlaufende Seriennummer oder Sachnummer abgespeichert wird. Dies kann später beim Einbau der Geräte zu einem Fehler führen, wenn zwei Steuergeräte vertauscht werden, sodass sich die Steuergeräte nicht an der vorgesehenen Einbauposition befinden. Wird beispielsweise ein solches falsch verbautes Steuergerät über eine Busleitung anhand seiner Sachnummer angesteuert, so führt das Steuergerät zwar die von ihm bereitgestellte Fahrzeugfunktion aus, aber es befindet sich dafür an der falschen Einbauposition. Ein Beispiel für solche Steuergeräte sind solche für Anzeigemodule, von denen mehrere über eine Busleitung an einen Fahrzeugcomputer angeschlossen sein können, damit dieser Anzeigewerte an einen Fahrzeuginsassen ausgeben kann.

Aus der DE 10 2008 004 125 B4 ist bekannt, dass mehrere Steuerschaltungen über ein Flachbandkabel eines Datenbusses miteinander verbunden sein können, wobei Datenbits über parallel verlaufende Datenleitungen des Flachbandkabels zeitgleich an allen Steuerschaltungen anliegen. Um Busadressen für die Steuerschaltungen zu vergeben, sind zwei weitere Leitungen bereitgestellt, die abwechselnd Leitungsunterbrechungen zwischen jeweils zwei der Steuergeräte aufweisen, sodass jeweils nur eine der beiden Leitungen elektrisch leitend zwischen diesen Steuergeräten ist. Über diese beiden Leitungen wird nacheinander ein Signal zum Auslösen einer Neuadressierung gesendet, während die jeweils zu verwendende Adresse über die parallelen Datenleitungen vorgegeben wird. Hat eine Steuerschaltung ein Adressvergabesignal empfangen und die dazu vorgegebene Busadresse abgespeichert, so leitet sie das Adressvergabesignal an die nächste Steuerschaltung weiter, die dann über die Datenleitungen die nächste Busadresse empfängt. Für das Vorgeben der Busadresse ist ein Controller notwendig, der die jeweils zu verwendende Busadresse über die Datenleitungen aussendet.

Aus der DE 10 2005 056 294 B4 ist ein Verfahren zum Zuordnen von Busadressen an Busteilnehmer bekannt. Jeder Busteilnehmer wird nacheinander mit einer Busadresse versorgt, indem die aktuell zu vergebende Busadresse über ein Broadcast-Telegramm allen Busteilnehmern mitgeteilt wird, aber außerhalb der Busleitung nur einem Busteilnehmer ein weiteres Signal mitgeteilt wird, dass nur dieser detektieren kann, sodass nur dieser Busteilnehmer die aktuell zu vergebende Busadresse abspeichert. Somit ist zusätzlich zu der Busleitung stets noch ein weiterer Kommunikationsweg nötig.

Aus der EP 1 573 974 B1 ist eine Selbstvergabe für Busadressen bekannt, bei welchem Busteilnehmer über eine Daisy-Chain-Verschaltung miteinander in dem Bussystem verschaltet sind. Diese Daisy-Chain-Verschaltung erfolgt nur während einer Adressvergabe, wofür die Busteilnehmer zusätzliche Schaltmittel zum Auftrennen der Busleitung in Buszweige benötigen. Für die Adressvergabe selbst prüft jedes Steuergerät, ob an dem ausgehenden Buszweig eine elektrische Kenngröße darauf hinweist, dass noch ein weiteres Steuergerät nachgeschaltet ist. Ist dies nicht der Fall, so weist sich ein solches Steuergerät selbst eine Adresse zu und verändert seinen Schaltungszustand, wodurch sich die elektrische Kenngröße für das nächste der Steuergeräte verändert, sodass sich dort das Steuergerät ebenfalls eine Adresse zuweist. Diese Adressvergabe basiert auf einer genauen Messung elektrischer Kenngrößen und Zeitwerte, was entsprechend aufwändige und genaue Schaltungen erfordert.

Ferner offenbart die Druckschrift WO 2010/ 147 516 A1 ein Verfahren zum Aktivieren mindestens einer Funktion, die in einem Fahrzeugkommunikationssystem in einem schweren Fahrzeug oder einer Arbeitsmaschine gespeichert ist, die Druckschrift WO 2010/ 074 677 A1 offenbart ein Verfahren und ein Gerät zum Durchführen einer automatischen Gerätekonfiguration, und die Druckschrift WO 2017/ 024 226 A1 offenbart ein Verfahren und eine Vorrichtung zur Ermöglichung der Erkennung und Zuweisung eindeutiger Adressen für identische oder ähnliche Geräte, die in einer seriellen Kette von Geräten in einer Hochgeschwindigkeits-Kommunikationsverbindung zusammengefügt sind.

Der Erfindung liegt die Aufgabe zugrunde, in einem Kraftfahrzeug Steuergeräte mit bestimmten, unterschiedlichen Fahrzeugfunktionen an den jeweils korrekten Einbauort einzubauen, wo die jeweilige Fahrzeugfunktion benötigt wird oder vorgesehen ist.

Die erfindungsgemäße Aufgabe wird durch die Gegenstände der unabhängigen Patentansprüche gelöst. Vorteilhafte Weiterbildungen der Erfindung ergeben sich durch die Merkmale der abhängigen Patentansprüche und sind durch die folgende Beschreibung und die Figuren beschrieben.

Durch die Erfindung ist ein Kraftfahrzeug mit mehreren Steuerschaltungen oder Steuergeräten bereitgestellt. Die Steuergeräte sind dazu eingerichtet, eine jeweilige Fahrzeugfunktion in dem Kraftfahrzeug bereitzustellen, wobei die Fahrzeugfunktionen der Steuergeräte unterschiedlich sind und wobei die Steuergeräte durch eine gemeinsame Busleitung verbunden sind, welche nacheinander durch eine jeweilige Kommunikationsschaltung der Steuergeräte geführt oder verlegt ist, und hierdurch die Steuergeräte zu einer Daisy-Chain-Verschaltung hintereinander verschaltet sind. Die Steuergeräte teilen sich also eine gemeinsame Busleitung, wobei, wie noch beschrieben wird, keine durchgehende Busleitung vorgesehen sein muss, die alle Steuergeräte auch galvanisch verbindet. Die Busleitung ist innerhalb der Steuergeräte durch deren jeweilige Kommunikationsschaltung hindurch geführt oder verlegt, sodass Daten oder Busnachrichten oder Bustelegramme entlang der Busleitung durch die auf dem Übertragungsweg liegenden Kommunikationsschaltungen hindurch übertragen werden. Eine andere Bezeichnung für die Daisy-Chain-Verschaltung ist auch Reihenschaltung oder Kettenschaltung.

Um zu vermeiden, dass die Steuergeräte mit ihren unterschiedlichen Fahrzeugfunktionen im Kraftfahrzeug an vertauschten Einbaupositionen verbaut werden können, ist erfindungsgemäß vorgesehen, dass in jedem der Steuergeräte jede der Fahrzeugfunktionen implementiert ist und eine Prozessorschaltung dazu eingerichtet ist, eine Positionsangabe zu ermitteln, welche eine Position des jeweiligen Steuergeräts innerhalb der Daisy-Chain-Verschaltung angibt (also das wievielte Steuergerät in der Daisy-Chain-Verschaltung es jeweils ist), und in Abhängigkeit von der ermittelten Positionsangabe aus den implementierten Fahrzeugfunktionen eine der Position zugeordneten Fahrzeugfunktion auszuwählen und die ausgewählte Fahrzeugfunktion, insbesondere nur die ausgewählte Fahrzeugfunktion oder nur die der Position zugeordneten mehreren Fahrzeugfunktionen, im Kraftfahrzeug für eine Aktivierung anzubieten. Mit "Implementieren" einer Fahrzeugfunktion ist hier gemeint, dass in der Prozessorschaltung des jeweiligen Steuergeräts Programmcode oder Software für jede der Fahrzeugfunktionen hinterlegt oder abgespeichert oder bereitgestellt ist. Jede der Fahrzeugfunktionen kann also potentiell von jedem der Steuergeräte an jeder der Einbaufunktionen bereitgestellt werden. Handelt es sich bei der Fahrzeugfunktion um eine Hardware-gebundene oder durch eine Hardware oder Schaltung oder ein Bauteil bereitgestellte Fahrzeugfunktion, so ist jedes der Steuergeräte mit der entsprechenden Hardware und/oder dem entsprechenden Bauteil ausgestaltet. Die Steuergeräte sind somit generisch, das heißt sie können an jeder Einbauposition eingebaut werden und können dort die jeweils für diese Einbauposition vorgesehene Fahrzeugfunktion jeweils bereitstellen oder ausführen. Somit muss jedes Steuergerät nur herausfinden, an welcher Einbauposition es eingebaut worden ist, um die richtige, also für diese Einbauposition vorgesehene zumindest eine Fahrzeugfunktion auszuwählen. Jedes der Steuergeräte kann hierzu durch seine Prozessorschaltung z.B. eine Detektionsroutine ausführen, sodass durch das Steuergerät selbsttätig erkannt werden kann, an welcher Position entlang der Daisy-Chain-Verschaltung sich das Steuergerät befindet. Eine Einbauposition im Kraftfahrzeug entspricht also einer jeweiligen Position in der Daisy-Chain-Verschaltung. Entsprechend kann also durch Verlegen oder durch Verkabeln der Einbaupositionen mit der Busleitung dafür gesorgt werden oder vorgesehen werden, dass beim Einbauen der Steuergeräte in die Einbauposition und Anschließen des jeweiligen Steuergeräts an die Busleitung die Position des Steuergeräts innerhalb der Daisy-Chain-Verschaltung ein Signal oder ein Hinweis auf die korrespondierende Einbauposition im Kraftfahrzeug ist. Erkennt die Prozessorschaltung in einem Steuergerät eine bestimmte Position des jeweiligen Steuergeräts innerhalb der Daisy-Chain-Verschaltung, so ist dieser Position eine entsprechende Einbauposition im Kraftfahrzeug zugeordnet und die Prozessorschaltung kann die der Position in der Daisy-Chain-Verschaltung und damit der Einbauposition zugeordnete zumindest eine Fahrzeugfunktion in dem Steuergerät auswählen und die ausgewählte Fahrzeugfunktion betreiben oder bereitstellen oder für eine Aktivierung anbieten. Insbesondere ist nur diese Fahrzeugfunktion für die Aktivierung angeboten und die übrigen implementierten Fahrzeugfunktionen bleiben deaktiviert oder inaktiv. Mit dem Anbieten ist gemeint, dass die jeweilige Fahrzeugfunktion in dem Steuergerät abrufbar oder auslösbar ist, beispielsweise durch eine externe Ansteuerung, beispielsweise über die Busleitung oder durch eine Bedienung durch einen Benutzer. Jedes der Steuergeräte stellt also ein Bauteil in dem Kraftfahrzeug dar, in welchem alle nötigen Informationen bereitgestellt oder gespeichert sind, um jede Rolle innerhalb der Daisy-Chain-Verschaltung einnehmen zu können, indem ein generischer Satz an unterschiedlichen Fahrzeugfunktionen in dem Steuergerät bereitgestellt ist und nur die für die Einbauposition vorgesehene Fahrzeugfunktion im Kraftfahrzeug für die Auswahl oder Aktivierung freigeschaltet oder bereitgestellt wird.

Durch die Erfindung ergibt sich der Vorteil, dass die Steuergeräte jeweils ohne vorhergehende Sortierung oder Auswahl an jeweils irgendeine der für die Steuergeräte insgesamt vorgesehenen Einbaupositionen in dem Kraftfahrzeug verbaut oder eingebaut werden können und sich dann jedes Steuergerät anhand seiner Position in der Daisy-Chain-Verschaltung diejenige der Fahrzeugfunktionen auswählt, die zu der Einbauposition gehört oder passt. Somit kann es beim Einbau des Steuergeräts in das Kraftfahrzeug nicht zu einer Vertauschung eines Steuergeräts kommen, da jedes Steuergerät für den Einbau an jeder der für die Steuergeräte möglichen Einbaupositionen eingebaut werden kann.

Die Erfindung umfasst auch Weiterbildungen, die nicht-triviale zusätzliche technische Vorteile ergeben.

Eine Weiterbildung umfasst, dass die Busleitung in jedem Steuergerät durch dessen Kommunikationsschaltung unterbrochen und damit in Buszweige zertrennt ist, sodass an jeder Kommunikationsschaltung oder an jeder Kommunikationsschaltung bis auf der letzten Kommunikationsschaltung in der Daisy-Chain-Verschaltung zwei Busleitungen enden. Jeweils zwei Steuergeräte sind somit über einen separaten Buszweig der Busleitung verbunden. Jedes der Steuergeräte oder jedes bis auf das letzte in der Daisy-Chain-Verschaltung letzte der Steuergeräte dazu eingerichtet sind, entlang der Daisy-Chain der Reihe nach jeweils mittels seiner Kommunikationsschaltung über einen seiner Buszweige eine Aufforderungsnachricht mit einer Positionsangabe zu empfangen (eingehender Buszweig), in Abhängigkeit von der empfangenen Positionsangabe die eigene Positionsangabe zu ermitteln und mittels seiner Kommunikationsschaltung über den anderen seiner Buszweige (ausgehender Buszweig) seinerseits eine Aufforderungsnachricht mit der soeben ermittelten eigenen Positionsangabe an das in der Daisy-Chain-Verschaltung nächste Steuergerät auszusenden. Die Busleitung ist somit durch die Kommunikationsschaltungen aufgetrennt in einzelne Buszweige, sodass eine Busnachricht oder ein Bustelegramm nur dann in der Busleitung an einem Steuergerät vorbei zum nächsten übertragen wird, wenn das Steuergerät selbst aktiv mittels seiner Kommunikationsschaltung die Busnachricht oder das Bustelegramm aus dem eingehenden Buszweig ausliest und wieder in den ausgehenden Buszweig zum nächsten Steuergerät aussendet oder abgibt. Die Busleitung kann hierbei für eine unidirektionale oder eine bidirektionale Kommunikation vorgesehen sein. Die Busleitung kann einadrig oder mehradrig sein. Sie kann als Flachkabel oder Twisted-Pair-Kabel oder Koaxialkabel oder optische Leitung ausgestaltet sein, um nur Beispiele zu nennen.

Eine beispielhafte Detektionsroutine für die Ermittlung der eigenen Positionsangabe kann im jeweiligen Steuergerät beispielsweise vorsehen, dass durch Hochzählen eines Zählers oder Zählerwerts die eigene Positionsangabe ermittelt wird, sodass sich das erste Steuergerät beispielsweise die Ordnungsnummer 1 zuweist und diese Ordnungsnummer dem nächsten Steuergerät mitteilt, welches sich dann durch Hochzählen die Ordnungsnummer 2 als Positionsangabe zuweist und dies an das nächste Steuergerät signalisiert. Es kann aber durch die Detektionsroutine zusätzlich oder alternativ mittels einer Zuordnungsvorschrift, beispielsweise einer Tabelle, in Abhängigkeit von der empfangenen Positionsangabe die eigene Positionsangabe ermittelt werden, die beispielsweise eine Aussage über die Einbauposition (beispielsweise "Kombiinstrument" oder "Head-up-Display" (Kopf-oben-Anzeige) oder "Mittelkonsole") angibt. Indem nacheinander erst das erste Steuergerät in der Daisy-Chain-Verschaltung sich mittels seiner Detektionsroutine eine eigene Positionsangabe zuordnet und dann mittels dieser eigenen Positionsangabe im nächsten Steuergerät dort die Ermittlung der eigenen Positionsangabe auslöst oder veranlasst, bestimmt also der Vorgänger in der Daisy-Chain-Verschaltung (also das Vorgängersteuergerät) die Funktion oder die Fahrzeugfunktion im nachfolgenden Steuergerät. Diese Vergabe oder Ermittlung der Position erfolgt in einem Initialisierungsmodus, der dadurch ausgelöst werden kann, dass an das erste Steuergerät der Daisy-Chain-Verschaltung, also einem Steuergerät an einem Ende der Daisy-Chain-Verschaltung, durch einen Fahrzeugcomputer die erste Aufforderungsnachricht gesendet wird, die beispielsweise als Positionsangabe die Position 0 oder -1 enthalten kann, woraufhin in dem ersten Steuergerät das Ermitteln der eigenen Positionsangabe erfolgt. Somit kann durch die Reihenschaltung oder Daisy-Chain-Verschaltung nach dem Einbau oder Verbau der Steuergeräte durch dieses Vorgänger-Nachfolger-Prinzip eine Position in der Daisy-Chain-Verschaltung oder Kette selbstständig durch jedes Steuergerät ermittelt werden.

Eine Weiterbildung umfasst, dass jedes der Steuergeräte dazu eingerichtet ist, als Positionsangabe eine geräteindividuelle Busadresse für eine Buskommunikation zu ermitteln oder aus der ermittelten Positionsangabe die Busadresse zu bilden (z.B. mittels einer Abbildungstabelle). Um die Positionsangabe auch für eine Buskommunikation zu nutzen, kann somit als Positionsangabe eine geräteindividuelle Busadresse für eine Buskommunikation ermittelt werden oder aus der ermittelten Positionsangabe (beispielsweise "Drittes Steuergerät in der Verschaltung") die Busadresse hergeleitet oder gebildet werden, was beispielsweise mittels einer Abbildungstabelle oder einer Zuordnungsvorschrift erfolgen kann. Somit ergibt sich für jede Einbauposition auch eine eindeutige Busadresse, sodass durch Adressieren einer Busnachricht oder eines Bustelegramms an diese Busadresse das entsprechende Steuergerät in dieser Einbauposition, die zu dieser Busadresse gehört, adressiert oder gesteuert wird.

Bei der Fahrzeugfunktion, die durch das jeweilige Steuergerät in Abhängigkeit von der Position in der Daisy-Chain-Verschaltung und/oder der Einbauposition bereitgestellt wird, kann es sich beispielsweise um eine jeweils für die Einbauposition vorgesehene Ausgabegraphik oder eine Beleuchtung handeln. Je nach Einbauposition ergibt sich somit eine andere Ausgabegraphik oder Beleuchtung, um nur Beispiele zu nennen. Die Fahrzeugfunktion kann zusätzlich oder alternativ dazu auch vorsehen, dass das Steuergerät bei der Buskommunikation über die Busleitung eine geräteindividuelle Busadresse benutzt, also auf der Busleitung über eine spezifische, nur für dieses Steuergerät genutzte Busadresse adressiert wird. Mit anderen Worten reagiert nur das jeweilige Steuergerät auf die Busadresse mit der Ausführung oder Verarbeitung der jeweiligen an diese Busadresse adressierten Busnachricht oder dem Bustelegramm. Das Steuergerät ist dann dazu eingerichtet, als Fahrzeugfunktion oder als Bestandteil der Fahrzeugfunktion Busnachrichten unter dieser Busadresse zu akzeptieren (deren Nachrichteninhalt zu verarbeiten oder einen in der Busnachricht enthaltenen Steuerbefehl auszuführen) und/oder Busnachrichten mit dieser Busadresse als Absender zu versenden. Jedes Steuergerät kann aber in der beschriebenen Weise unter jeder möglichen Busadresse kommunizieren, da alle Fahrzeugfunktionen und damit alle Busadressen implementiert sind. Das jeweilige Steuergerät beschränkt sich aber auf diejenige Busadresse, die der Position in der Daisy-Chain-Verschaltung entspricht. Eine Weiterbildung umfasst entsprechend, dass die Fahrzeugfunktion umfasst, für eine Buskommunikation über die Busleitung die geräteindividuelle Busadresse zu benutzen.

Eine Weiterbildung umfasst, dass einige oder alle der Steuergeräte baugleich sind und/oder gleiche Sachnummern und/oder Modellnummern aufweisen. Somit ist es also möglich, die Steuergeräte in einem gleichartigen oder gleichbleibenden Herstellungsprozess herzustellen. Beim Herstellungsprozess muss nicht darauf geachtet werden, an welcher Einbauposition im Kraftfahrzeug jedes der Steuergeräte letztendlich eingebaut wird. Jedes der Steuergeräte konfiguriert sich in der beschriebenen Weise durch Ermitteln der Positionsangabe selbst, nachdem es eingebaut worden ist.

Eine Weiterbildung umfasst, dass einige oder alle der Steuergeräte jeweils mit einem Anzeigemodul verschaltet sind und dazu eingerichtet sind, mittels der ausgewählten Fahrzeugfunktion das jeweilige Anzeigemodul zu steuern. Somit kann in dem Kraftfahrzeug eine graphische Ausgabe über mehrere Anzeigemodule bereitgestellt werden, die baugleich sind, sodass beim Einbau der Anzeigemodule keine gesonderte Maßnahme dahingehend erforderlich ist, dass eine Verwechslung der Anzeigemodule beim Einbau in die Einbaupositionen verhindert werden müsste. Ein Anzeigemodul kann beispielsweise auf der Grundlage von Mikro-LEDs und/oder OLEDs (organic light emitting diodes) oder TFTs basieren. Die Anzeigemodule sind über die Busleitung adressierbar, sodass der Anzeigeinhalt der Anzeigemodule über die Steuergeräte festgelegt oder gesteuert werden kann.

Eine Weiterbildung umfasst, dass mehrere der Anzeigemodule in einer Anzeigeeinrichtung zu einer mehrteiligen Anzeige zusammengesetzt sind, die eine Gesamtanzeigefläche aufweist, und die Position des Steuergeräts des jeweiligen Anzeigemoduls innerhalb der Daisy-Chain-Verschaltung einer Position des zugehörigen Anzeigemoduls in der Gesamtanzeigefläche entspricht. Mit anderen Worten kann ein Anzeigegerät oder ein Display bereitgestellt werden, dass eine Gesamtanzeigefläche aufweist, die größer ist als die einzelne Anzeigefläche jedes der Anzeigemodule. Jedes der Anzeigemodule stellt ein jeweiliges Anzeigepanel der Gesamtanzeigefläche dar. So kann beispielsweise vorgesehen sein, dass die Anzeigemodule nebeneinander bündig angeordnet sind, sodass sich die Gesamtanzeigefläche als geschlossene Fläche ergibt. Wo innerhalb der Gesamtanzeigefläche die jeweilige Anzeigefläche jedes Anzeigemoduls angeordnet ist (beispielsweise am Rand oder in der Mitte) ist anhand der Position des Steuergeräts in der Daisy-Chain-Verschaltung codiert, indem eine entsprechende Zuordnung durch die Anordnung der Busleitung im Kraftfahrzeug gegeben ist. Somit kann mit günstigen kleineren Anzeigemodulen eine Gesamtanzeigefläche im Kraftfahrzeug bereitgestellt werden, ohne dass ein kostspieliges entsprechend großes einzelnes Anzeigemodul, welches die Gesamtanzeigefläche bereitstellt, bereitgestellt werden müsste. Dennoch kann beim Zusammenbau oder der Bereitstellung der Gesamtanzeigefläche keine Vertauschung der Steuergeräte ein fehlerhaftes Display oder einen fehlerhaften Anzeigeinhalt durch vertauschte Steuergeräte verursachen.

Eine Weiterbildung umfasst, dass jedes der Steuergeräte einen ASIL aufweist und ausgehend von dem ersten Steuergerät in der Daisy-Chain-Verschaltung die Steuergeräte gemäß ihrem ASIL geordnet absteigend angeordnet sind. Der ASIL beschreibt eine Absicherung des jeweiligen Steuergeräts gegen einen Ausfall desselben oder eines Versagens seiner Funktionsfähigkeit. Indem die Steuergeräte gemäß ihrem ASIL geordnet absteigend verschaltet sind, wird bei Ausfall eines Steuergeräts, wenn hierdurch die Buskommunikation in der Busleitung zu nachfolgenden Steuergeräten hin unterbrochen ist, nur ein solches Steuergerät betroffen, das denselben oder einen geringeren ASIL aufweist. Steuergeräte mit gleichem ASIL sind dabei natürlich gemäß der Ordnung unmittelbar nacheinander zu verschalten. Somit kann sichergestellt werden, dass das erste Steuergerät weiter über die Busleitung adressiert oder betrieben werden kann, selbst wenn alle übrigen Steuergeräte oder ein nachgeschaltetes Steuergerät ausfällt.

Zusätzlich oder alternativ kann vorgesehen sein, dass in der jeweiligen Kommunikationsschaltung zumindest ein Überbrückungsschalter vorgesehen ist, welcher bei Erkennen eines Defekts oder einer Funktionsuntüchtigkeit oder eines Ausfalls des Steuergeräts die elektrische Trennung zwischen den angeschlossenen Buszweigen überbrückt, sodass der eingehende Buszweig und der ausgehende Buszweig in der Kommunikationsschaltung elektrisch überbrückt oder elektrisch verbunden sind, d. h. selbst bei inaktiver oder ausgeschalteter Kommunikationsschaltung können Daten durch die Kommunikationsschaltung hindurch in der Busleitung übertragen werden, da die Buszweige miteinander elektrisch verbunden sind. Als jeweiliger Überbrückungsschalter kann jeweils beispielsweise ein Transistorschalter vorgesehen sein. Der jeweilige Überbrückungsschalter kann beispielsweise durch die Prozessorschaltung des Steuergeräts und/oder durch eine Überwachungseinheit der Kommunikationsschaltung selbst realisiert sein. Eine Überwachungseinheit kann beispielsweise einen integrierten Schaltkreis aufweisen, der beispielsweise eine sogenannte Watchdog-Funktionalität für das Steuergerät bereitstellen kann.

Im Zusammenhang mit der Bezeichnung "erstes Steuergerät" ist hier dasjenige Steuergerät gemeint, das über die Busleitung direkt, oder ohne Zwischenschaltung eines weiteren der Steuergeräte mit einem Fahrzeugrechner oder Fahrzeugcomputer verschaltet ist. Das letzte Steuergerät in der Daisy-Chain-Verschaltung befindet sich entsprechend am anderen Ende. In dem Fahrzeugcomputer ist somit jedes der Steuergeräte gemäß seiner Position in der Daisy-Chain-Verschaltung beziehungsweise gemäß seiner Einbauposition im Kraftfahrzeug unterschiedlich ansteuerbar, indem die entsprechende Fahrzeugfunktion genutzt wird. Insbesondere wenn als Fahrzeugfunktion auch die Nutzung einer eindeutigen Busadresse in jedem Steuergerät vorgesehen ist, kann in dem Fahrzeugcomputer durch Auswählen einer entsprechenden Busadresse festgelegt werden, welches Steuergerät an welcher Einbauposition durch den Fahrzeugcomputer über die Busleitung angesteuert wird.

Eine Weiterbildung umfasst entsprechend, dass das Steuergerät eines Endes der Daisy-Chain-Verschaltung (nämlich das besagte erste Steuergerät) über die Busleitung mit einem Fahrzeugcomputer des Kraftfahrzeugs verbunden ist, welcher dazu eingerichtet ist, die Steuergeräte in Abhängigkeit von ihrer Position in der Daisy-Chain-Verschaltung und/oder ihrer Einbauposition und/oder in Abhängigkeit von ihrer Fahrzeugfunktion über die Busleitung anzusteuern.

Eine Weiterbildung umfasst, dass die Busleitung zusätzlich ausgehend von dem Steuergerät des anderen Endes der Daisy-Chain-Verschaltung zu dem Fahrzeugcomputer zurückgeführt ist und der Fahrzeugcomputer eine Kontrollroutine aufweist, die dazu eingerichtet ist, über die Busleitung eine erste Nachricht an das Steuergerät des einen Endes der Daisy-Chain-Verschaltung zu senden und zu überprüfen, ob sich eine durch diese Nachricht ausgelöste zweite Nachricht aus dem Steuergerät des anderen Endes empfangen lässt, und bei Ausbleiben der zweiten Nachricht eine unterbrochene Busleitung zu signalisieren. Mit anderen Worten ist durch die Busleitung eine Ringleitung gebildet, die vom Fahrzeugcomputer ausgeht, nacheinander durch die Kommunikationsschaltungen der Steuergeräte geführt ist und wieder zum Fahrzeugcomputer zurückführt. Wird dann eine erste Nachricht an das erste Steuergerät gesendet und leitet das Steuergerät diese Nachricht weiter oder löst beim nachfolgenden oder nachgeschalteten Steuergerät ebenfalls das Erzeugen einer Nachricht aus, so wird letztendlich in einem Dominoeffekt durch das letzte Steuergerät in der Daisy-Chain-Verschaltung ebenfalls eine Nachricht, die hier als zweite Nachricht bezeichnet ist, erzeugt, die dann zurück über die rückgeführte Busleitung zum Fahrzeugcomputer übertragen wird. Wird die zweite Nachricht empfangen, so ist in dem Fahrzeugcomputer bestätigt, dass die Busleitung vollständig oder unversehrt ist und alle Steuergeräte empfangsbereit sind. Bleibt die zweite Nachricht nach einer vorbestimmten maximalen Wartezeit aus, so ist die Busleitung unterbrochen, weil sie beispielsweise beschädigt ist, und/oder eines der Steuergeräte ist ausgefallen und somit die Daisy-Chain-Verschaltung durch dessen Kommunikationsschaltung unterbrochen. Die erste Nachricht kann beispielsweise die beschriebene Aufforderungsnachricht zum Ermitteln der eigenen Position der Steuergeräte sein. Sendet dann auch das letzte Steuergerät in der Daisy-Chain-Verschaltung eine solche Aufforderungsnachricht in der rückgeführten Busleitung, also im letzten Buszweig, an den Fahrzeugcomputer, so weiß dieser, dass auch das letzte Steuergerät seine Position ermittelt hat. Es kann sogar durch diese zweite Nachricht ermittelt werden, wie viele Steuergeräte insgesamt in der Busleitung verschaltet sind. Somit kann also durch die erste Nachricht ein Durchzählen der Steuergeräte ausgelöst werden und in dem Fahrzeugcomputer kann ermittelt werden, ob die ermittelte Anzahl an Steuergeräten einer vorgegebenen Soll-Anzahl entspricht. Ist die ermittelte Anzahl ungleich der Soll-Anzahl, so kann ein Fehlersignal erzeugt werden.

Die Erfindung stellt auch ein Steuergerät für ein Kraftfahrzeug gemäß Anspruch 11 bereit.

Das Steuergerät weist eine eine Prozessorschaltung und eine Kommunikationsschaltung zum Anschließen an eine Busleitung auf, und in der Prozessorschaltung des Steuergeräts sind mehrere vorbestimmte Fahrzeugfunktionen implementiert, wobei das Steuergerät dazu eingerichtet ist, dass in dem Kraftfahrzeug mehrere Steuergeräte angeordnet werden, die Fahrzeugfunktionen der Steuergeräte unterschiedlich sind und die mehreren Steuergeräte durch die Busleitung verbunden werden, welche nacheinander durch eine jeweilige Kommunikationsschaltung der Steuergeräte geführt werden und hierdurch die Steuergeräte zu einer Daisy-Chain-Verschaltung hintereinander verschaltet werden, wobei in dem Steuergerät jede der Fahrzeugfunktionen implementiert ist, wobei die Prozessorschaltung dazu eingerichtet ist, eine Positionsangabe zu ermitteln, welche eine Position des Steuergeräts innerhalb der durch die Busleitung gebildeten Daisy-Chain-Verschaltung angibt, und in Abhängigkeit von der ermittelten Positionsangabe aus den implementierten Fahrzeugfunktionen eine der Position zugeordnete Fahrzeugfunktion auszuwählen und die ausgewählte Fahrzeugfunktion in dem Kraftfahrzeug für eine Aktivierung anzubieten. Mehrere Steuergeräte dieser Ausführungsform können somit in einem Kraftfahrzeug ohne eine Gefahr einer Vertauschung in einem Kraftfahrzeug verbaut werden.

Die Erfindung sieht natürlich auch Weiterbildungen der Steuergeräte vor, wie sie bereits im Zusammenhang mit den Weiterbildungen des erfindungsgemäßen Kraftfahrzeugs beschrieben wurden.

Die Erfindung stellt auch ein Verfahren zum Konfigurieren von Steuergeräten in einem Kraftfahrzeug gemäß Anspruch 12 bereit, damit durch die Steuergeräte eine Fahrzeugfunktion bereitgestellt wird, wobei die Fahrzeugfunktionen der Steuergeräte unterschiedlich sind und die Steuergeräte durch eine gemeinsame Busleitung verbunden sind, welche nacheinander durch die Steuergeräte geführt ist und hierdurch die Steuergeräte zu einer Daisy-Chain-Verschaltung hintereinander verschaltet.

Um Verwechslungen beim Einbau der Steuergeräte zu vermeiden, ist vorgesehen, dass in jedem der Steuergeräte jede der Fahrzeugfunktionen implementiert ist und in jedem der Steuergeräte eine Prozessorschaltung eine Positionsangabe ermittelt, welche eine Position des jeweiligen Steuergeräts innerhalb der Daisy-Chain-Verschaltung angibt, und in Abhängigkeit von der ermittelten Positionsangabe aus den implementierten Fahrzeugfunktionen eine der Position zugeordnete Fahrzeugfunktion auswählt und die ausgewählte Fahrzeugfunktion im Kraftfahrzeug zur Aktivierung bereitstellt. Das erfindungsgemäße Verfahren ergibt sich somit im Betrieb des erfindungsgemäßen Kraftfahrzeugs, wenn darin die Steuergeräte ihre Position in der Daisy-Chain-Verschaltung selbstständig ermitteln.

Die Erfindung umfasst auch Weiterbildungen des Verfahrens, die durch solche Merkmale gekennzeichnet sind, wie sie bereits in Zusammenhang mit den Weiterbildungen des erfindungsgemäßen Kraftfahrzeugs beschrieben wurden.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar.

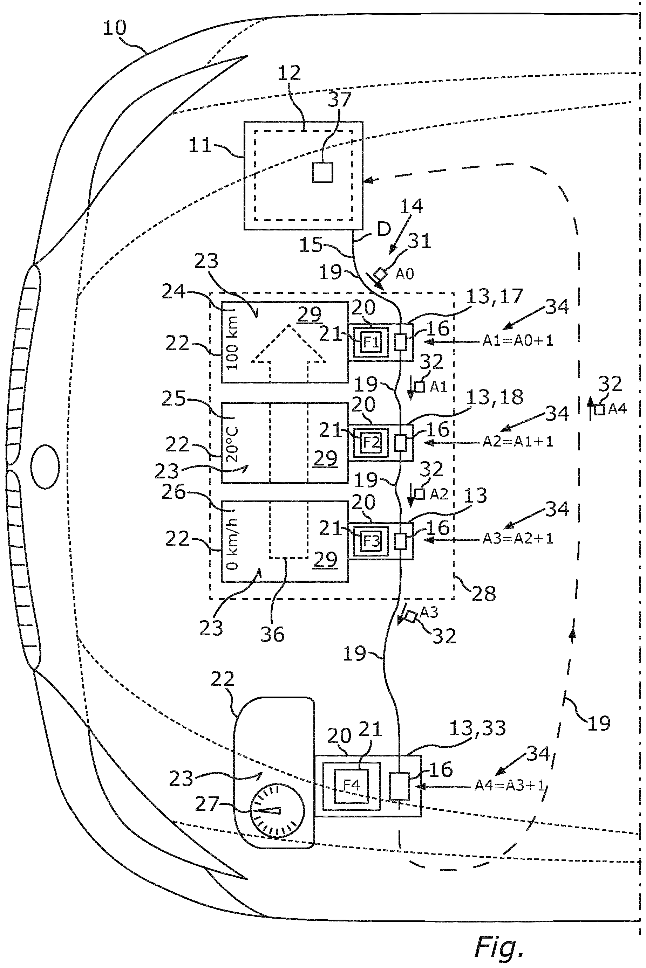

Die Erfindung wird nun anhand eines bevorzugten Ausführungsbeispiels sowie unter Bezugnahme auf die Zeichnungen näher erläutert. Es zeigt die einzige Figur:
- Fig.: eine schematische Darstellung einer Ausführungsform des erfindungsgemäßen Kraftfahrzeugs, das eine Ausführungsform des erfindungsgemäßen Verfahrens durchführen kann.

Die Figur zeigt ein Kraftfahrzeug 10, das in an sich bekannter Weise einen Fahrzeugcomputer 11 aufweisen kann. Das Kraftfahrzeug 10 kann beispielsweise als ein Straßenfahrzeug, wie beispielsweise ein Personenkraftwagen, ausgestaltet sein. Dies ist aber nur als beispielhafte Ausgestaltung zu verstehen. Der Fahrzeugcomputer 11 kann eine Prozessorschaltung 12 aufweisen, die beispielsweise einen Mikroprozessor oder mehrere Mikroprozessoren umfassen kann. Durch den Fahrzeugcomputer 11 können mehrere Steuergeräte 13 angesteuert werden, die hierzu hintereinander in einer Reihenschaltung oder Daisy-Chain-Verschaltung 14 über eine Busleitung 15 verschaltet sein können. Die Busleitung 15 kann einadrig oder mehradrig sein, wie es bereits beschrieben wurde. Jedes der Steuergeräte 13 kann mit der Busleitung 15 mittels einer Kommunikationsschaltung 16 verschaltet sein, die derart ausgestaltet sein kann, dass von dem Fahrzeugcomputer 11 über die Busleitung 15 aus gesendete Daten oder Nachrichten oder Telegramme in der Kommunikationsschaltung 16 des ersten Steuergeräts 13 (hier zusätzlich mit dem Bezugszeichen 17 versehen) empfangen werden und die Busleitung 15 derart unterbrochen oder getrennt ist, dass die Daten nicht weiter zum nächsten Steuergerät 13 (hier zusätzlich mit dem Bezugszeichen 18 versehen) gelangen, sondern nur für den Fall, dass die Kommunikationsschaltung 16 die Daten selbst wieder an das nächste Steuergerät 18 aussendet, welches wiederum die Daten empfangen kann. Mit anderen Worten ist die Busleitung 15 in Buszweige 19 durch die Kommunikationsschaltungen aufgeteilt. Die Kommunikationsschaltungen 16 können an sich bekannter Weise als sogenannte Bus-Controller oder Busanschlüsse ausgestaltet sein.

Dieses Steuergerät 13 kann zusätzlich eine Prozessorschaltung 20 aufweisen, mittels welcher in dem Steuergerät 13 jeweils eine Fahrzeugfunktion 21 bereitgestellt werden kann, die sich voneinander unterscheiden, was in der Figur durch die Verwendung der unterschiedlichen Bezeichnungen F1, F2, F3, F4 veranschaulicht ist. Jedes Steuergerät 13 kann auch mehr als eine Fahrzeugfunktion 21 bereitstellen, also jeweils einen Funktionsumfang aus mehreren Fahrzeugfunktionen bereitstellen, wobei sich die Funktionsumfänge der Steuergeräte 13 untereinander unterscheiden. Beispiele für Fahrzeugfunktionen 21 können sein: die Verwendung einer geräteindividuellen Busadresse für den Datenbus D mit der Busleitung 15; eine Ansteuerfunktion für ein jeweiliges Anzeigemodul 22, das an das Steuergerät jeweils angeschlossen sein kann und unterschiedliche Grafiken oder Anzeigeinhalte 23 erzeugt, Steuerfunktionen für unterschiedliche, an das Steuergerät angeschlossene Schaltungen.

In der Figur ist beispielhaft dargestellt, wie auf den unterschiedlichen Anzeigemodulen 22, die hier beispielhaft dargestellt sind, als eine Funktion F1 eine Gesamtkilometeranzahl 24, eine Raumtemperatur 25, eine Fahrgeschwindigkeit 26, ein Tachometer 27 angezeigt werden, um nur Beispiele zu nennen. Der Fahrzeugcomputer 11 muss hierbei lediglich den aktuellen Wert senden und durch das Steuergerät 13 kann dann der entsprechende Anzeigeinhalt 23, also die entsprechenden Pixelwerte, generiert werden. Die Figur zeigt ein weiteres Ausführungsbeispiel, bei welchem drei der Steuergeräte 13 in einer gemeinsamen Anzeigeeinrichtung oder einem gemeinsamen Display 28 angeordnet sind. Beispielsweise kann durch die drei Anzeigemodule 22, die durch die Steuergeräte 13 des Displays 28 angesteuert werden, eine gemeinsame Gesamtanzeigefläche 29 bereitgestellt werden, sodass jedes Anzeigemodul 22 als Panel zum Bereitstellen eines Teils der Gesamtanzeigefläche 29 fungiert. Die Anzeigemodule 22 können hierzu bündig und jeweils paarweise aneinander angrenzend angeordnet sein. Beispielsweise kann das Display 28 ein sogenanntes Head-up-Display (Kopf-oben-Anzeige) für das Kraftfahrzeug 10 sein.

Das Anzeigemodul 22 für den Tachometer 27 kann beispielsweise in einem Kombiinstrument des Kraftfahrzeugs angeordnet sein.

Obwohl jedes der Steuergeräte 13 eine andere Fahrzeugfunktion 21 bereitstellt, sind die Steuergeräte 13 dennoch bevorzugt baugleich und/oder müssen nicht voneinander unterschieden werden, wenn es um die Herstellung oder die Montage des Kraftfahrzeugs 10 geht. Vielmehr kann jedes der Steuergeräte 13 für jede Einbauposition der Steuergeräte 13 verwendet werden. Hierzu sind in jedem der Steuergeräte 13 alle benötigten Fahrzeugfunktionen 21 implementiert, beispielsweise als entsprechende Software. Damit dann jedes Steuergerät 13 die für die konkrete Einbauposition, in welcher sich das Steuergerät 13 nach der Montage befindet, aktiviert oder bereitstellt, identifiziert die Prozessorschaltung 20 des jeweiligen Steuergeräts 13, an welcher Position innerhalb der Daisy-Chain-Verschaltung 14 sich das Steuergerät 13 befindet. Hierzu kann ausgehend von dem Fahrzeugcomputer 11, der beispielsweise als Busmaster betrieben werden kann, über den Datenbus D, das heißt die Busleitung 15, eine Aufforderungsnachricht 31 versendet werden, die in der beschriebenen Weise in der Kommunikationsschaltung 16 des ersten Steuergeräts 17 abgefangen oder gelesen wird. Die Aufforderungsnachricht 31 kann beispielsweise eine initiale Busadresse A0 als Absender angeben. Mittels der Kommunikationsschaltung 16 kann die Prozessorschaltung 20 des ersten Steuergeräts 17 die Aufforderungsnachricht 31 auslesen und sich daraufhin beispielsweise als Bestandteil der Fahrzeugfunktion 21 eine eindeutige Busadresse A1 beispielsweise durch Inkrementieren der empfangenen Busadresse A0 erzeugen. Das Inkrementieren kann nach einer vorgegebenen Regel erfolgen, die in der Figur symbolisch als A0+1 dargestellt ist. Dies ist ein Beispiel für eine Detektionsroutine. Damit besitzt das erste Steuergerät 17 eine eindeutige Busadresse A1 und kann an dem Wert der Busadresse (A1) erkennen, dass es das erste Steuergerät 17 in der Daisy-Chain-Verschaltung 14 ist. Das erste Steuergerät 17 kann nun seinerseits eine Aufforderungsnachricht 32 an das in der Daisy-Chain-Verschaltung 14 nächste Steuergerät 18 aussenden und hierbei als Absender die eigene Busadresse A1 verwenden. In dem Steuergerät 18 kann in derselben Weise durch die Prozessorschaltung 20 die Aufforderungsnachricht 32 ausgelesen werden und beispielsweise als Bestandteil der Fahrzeugfunktion 21 das Steuergerät 18 eine eigene, Steuergeräte-individuelle Busadresse A2 mittels seiner Detektionsroutine durch Inkrementieren der empfangenen Busadresse A1 (symbolisch dargestellt als A2=A1+1) erzeugen. Dies kann so entlang der Daisy-Chain-Verschaltung 14 mittels weiterer Aufforderungsnachrichten 32 fortgesetzt werden. Das letzte Steuergerät 33 in der Daisy-Chain-Verschaltung 14 kann seinerseits eine Aufforderungsnachricht 32 erzeugen, die im Falle eines rückgeführten Buszweigs 19 hin zum Fahrzeugcomputer 11 diesem signalisiert, dass über die Busleitung 15 alle Steuergeräte 13 erreicht worden sind und die Busleitung 15 funktionsfähig ist. Die jeweilige individuelle Busadresse stellt eine Positionsangabe 34 dar, die mit einer Position des jeweiligen Steuergeräts 13 innerhalb der Daisy-Chain-Verschaltung 14 korreliert oder dieser entspricht. Die jeweilige Prozessorschaltung 20 jedes Steuergeräts 13 kann zusätzlich oder alternativ zur Ermittlung einer eindeutigen Steuergeräte-individuellen Busadresse als Positionsangabe 34 auch die Fahrzeugfunktion 21 aus der Gesamtheit der implementierten Fahrzeugfunktionen 21 (also alle Fahrzeugfunktionen F1, F2, F3, F4) jeweils auswählen und aktivieren in Abhängigkeit von dieser Positionsangabe 34. Somit können beispielsweise die Anzeigemodule 22 baugleich sein und jedes Steuergerät 13, das jeweils eines der Anzeigemodule 22 ansteuert, kann die jeweilige individuelle Ausgestaltung des Anzeigeinhalts 23, wie sie beschrieben wurde, in Abhängigkeit von der Positionsangabe 34 festlegen. Zudem können die Anzeigemodule 22 innerhalb des Displays 28 zusammenwirken und durch die Positionsangabe 34 oder die Busadresse kann der Fahrzeugcomputer 11 bestimmen, welcher Teil eines übergreifenden Anzeigeinhalts 36 auf welchem Anzeigemodul 22 angezeigt werden soll. Somit kann durch Verlegen der Busleitung 15 entlang der möglichen Einbaupositionen für Steuergeräte 13 das Vorwissen oder die Information festgelegt werden, wo sich diese Einbauposition im Verhältnis zur Position innerhalb der Daisy-Chain-Verschaltung befindet, was als Zuordnungstabelle oder als Zuordnungsvorschrift in dem Fahrzeugcomputer 11 gespeichert werden kann, das heißt in der Prozessorschaltung 12 des Fahrzeugcomputers 11 kann eine Positionszuordnung 37 vorgesehen sein, welche eine Zuordnung zwischen Einbauposition und Position innerhalb der Daisy-Chain-Verschaltung, also Ordnungszahl (erstes Steuergerät, zweites Steuergerät und so weiter) entspricht.

Das beschriebene "Daisychaining" (Daisy-Chain-Verschaltung 14) bedeutet somit, dass Steuergeräte 13 durch die Busleitung 15 verkettet und aneinander gehängt werden. Ziel ist es, dass z.B. hintereinander gereihte Anzeigemodule 22 eines Displays 28 die gleiche Sachnummer haben dürfen. Sie müssen sich daher selbständig nach Verbau identifizieren, um entsprechende Anzeigeinhalte 23 (z.B. Gesamtkilometeranzahl 24, Raumtemperatur 25, Fahrgeschwindigkeit 26) anzuzeigen.

Das Problem, das überwunden wird, besteht darin, dass mehrere baugleiche Geräte logisch hintereinander verbaut werden müssen, insbesondere mehr als zwei, aber danach individuell angesprochen werden können müssen. Wenn z.B. die bildgebende Einheit (z.B. eine Headunit, d.h. der Fahrzeugcomputer 11) einen Anzeigeinhalt 23 auf Display 2 (mittiges Anzeigemodul 22) anzeigen soll, muss sichergestellt sein, dass die Anzeigedaten auch auf Display 2 ankommen, obwohl Display 2 sachnummerngleich zu jedem übrigen Anzeigemodul 22 (also Display 1, 3 und 4 in dem Beispiel) sein kann. Die Sachnummerngleichheit der in Reihe geschalteten Anzeigemodule 22 mit ihren Steuergeräten 13 ist der interessanteste Fall der Reihenschaltung, aber die Idee funktioniert auch mit nichtsachnummerngleichen Bauteilen.

Durch die Reihenschaltung oder Daisy-Chain-Verschaltung 14 kann nach dem Verbau durch das erläuterte Vorgänger-Nachfolger Prinzip eine Position in der Kette der Daisy-Chain-Verschaltung 14 durch jedes Steuergerät 13 selbstständig ermittelt werden. Jedes Bauteil hat die nötigen Informationen, um jede Rolle oder Fahrzeugfunktion innerhalb der Kette der Daisy-Chain-Verschaltung 14 einnehmen zu können (wie eine Stammzelle oder generische Schaltung). Der Vorgänger bestimmt die Funktion des Nachfolgers in der Daisy-Chain-Verschaltung 14. Da die Bauteile oder Steuergeräte 13 auch entlang der Kette (von der HU oder dem Fahrzeugcomputer 11 aus gesehen) absteigend relevant sind, also gemäß ihres ASIL geordnet sind, kann ein Ausfall eines der Bauteile und der damit einhergehende Ausfall der nachfolgenden Bauteile, logisch behandelt und entsprechend darauf reagiert werden.

### Bezugszeichenliste

- 10: Kraftfahrzeug
- 11: Fahrzeugcomputer
- 12: Prozessorschaltung
- 13: Steuergerät
- 14: Daisy-Chain-Verschaltung
- 15: Busleitung
- 16: Kommunikationsschaltung
- 17: Steuergerät
- 18: Steuergerät
- 19: Buszweige
- 20: Prozessorschaltung
- 21: Fahrzeugfunktion
- 22: Anzeigemodul
- 23: Anzeigeinhalt
- 23: Anzeigemodule
- 24: Gesamtkilometeranzahl
- 25: Raumtemperatur
- 26: Fahrgeschwindigkeit
- 27: Tachometer
- 28: Display
- 29: Gesamtanzeigefläche
- 32: Aufforderungsnachricht
- 33: Steuergerät
- 34: Positionsangabe
- 36: Anzeigeinhalts
- 37: Positionszuordnung
- D: Datenbus

## Patentansprüche

1. Kraftfahrzeug (10) mit mehreren Steuergeräten (13), welche dazu eingerichtet sind, eine jeweilige Fahrzeugfunktion (21) in dem Kraftfahrzeug (10) bereitzustellen, wobei die Fahrzeugfunktionen (21) der Steuergeräte (13) unterschiedlich sind und wobei die Steuergeräte (13) durch eine gemeinsame Busleitung (15) verbunden sind, welche nacheinander durch eine jeweilige Kommunikationsschaltung (16) der Steuergeräte (13) geführt ist und hierdurch die Steuergeräte (13) zu einer Daisy-Chain-Verschaltung (14) hintereinander verschaltet,
**dadurch gekennzeichnet, dass**
in jedem der Steuergeräte (13)
a) jede der Fahrzeugfunktionen (21) implementiert ist und
b) eine Prozessorschaltung (20) dazu eingerichtet ist, eine Positionsangabe (34) zu ermitteln, welche eine Position des jeweiligen Steuergeräts (13) innerhalb der Daisy-Chain-Verschaltung (14) angibt, und in Abhängigkeit von der ermittelten Positionsangabe (34) aus den implementierten Fahrzeugfunktionen (21) eine der Position zugeordnete Fahrzeugfunktion (21) auszuwählen und die ausgewählte Fahrzeugfunktion (21) im Kraftfahrzeug (10) für eine Aktivierung anzubieten.

2. Kraftfahrzeug (10) nach Anspruch 1, wobei die Busleitung (15) in jedem Steuergerät (13) durch dessen Kommunikationsschaltung (16) unterbrochen und damit in Buszweige (19) zertrennt ist, sodass an jeder Kommunikationsschaltung (16) oder an jeder Kommunikationsschaltung (16) bis auf der letzten der Daisy-Chain-Verschaltung (14) zwei Busleitungen (15) enden, und jedes der Steuergeräte (13) oder jedes bis auf das letzte in der Daisy-Chain-Verschaltung (14) letzte der Steuergeräte (13) dazu eingerichtet ist, der Reihe nach jeweils mittels der jeweiligen Kommunikationsschaltung (16) über einen seiner Buszweige (19) eine Aufforderungsnachricht (32) mit einer Positionsangabe (34) zu empfangen, in Abhängigkeit von der empfangenen Positionsangabe (34) die eigene Positionsangabe (34) zu ermitteln und mittels der eigenen Kommunikationsschaltung (16) über den anderen seiner Buszweige (19) eine Aufforderungsnachricht (32) mit der ermittelten eigenen Positionsangabe (34) an das in der Daisy-Chain-Verschaltung (14) nächste Steuergerät (13) auszusenden.

3. Kraftfahrzeug (10) nach einem der vorhergehenden Ansprüche, wobei jedes der Steuergeräte (13) dazu eingerichtet ist, als Positionsangabe (34) eine geräteindividuelle Busadresse für eine Buskommunikation zu ermitteln oder aus der ermittelten Positionsangabe (34) die Busadresse zu bilden.

4. Kraftfahrzeug (10) nach Anspruch 3, wobei die Fahrzeugfunktion (21) umfasst, für eine Buskommunikation über die Busleitung (15) die geräteindividuelle Busadresse zu benutzen.

5. Kraftfahrzeug (10) nach einem der vorhergehenden Ansprüche, wobei einige oder alle der Steuergeräte (13) baugleich sind und/oder gleiche Sachnummern und/oder Modellnummern aufweisen.

6. Kraftfahrzeug (10) nach einem der vorhergehenden Ansprüche, wobei einige oder alle der Steuergeräte (13) jeweils mit einem Anzeigemodul (22) verschaltet sind und dazu eingerichtet sind, mittels der ausgewählten Fahrzeugfunktion (21) das jeweilige Anzeigemodul (22) zu steuern.

7. Kraftfahrzeug (10) nach Anspruch 6, wobei mehrere der Anzeigemodule (22) in einer Anzeigeeinrichtung zu einer mehrteiligen Anzeige zusammengesetzt sind, die eine Gesamtanzeigefläche (29) aufweist, und die Position des Steuergeräts (13) des jeweiligen Anzeigemoduls (22) innerhalb der Daisy-Chain-Verschaltung (14) einer Position des zugehörigen Anzeigemoduls (22) in der Gesamtanzeigefläche (29) entspricht.

8. Kraftfahrzeug (10) nach einem der vorhergehenden Ansprüche, wobei jedes der Steuergeräte (13) einen ASIL aufweist und ausgehend von dem ersten Steuergerät (13) in der Daisy-Chain-Verschaltung (14) die Steuergeräte (13) gemäß ihrem ASIL geordnet absteigend angeordnet sind.

9. Kraftfahrzeug (10) nach einem der vorhergehenden Ansprüche, wobei das Steuergerät (13) eines Endes der Daisy-Chain-Verschaltung (14) über die Busleitung (15) mit einem Fahrzeugcomputer (11) des Kraftfahrzeugs (10) verbunden ist, welcher dazu eingerichtet ist, die Steuergeräte (13) in Abhängigkeit von ihrer Position und/oder in Abhängigkeit von ihrer Fahrzeugfunktion (21) über die Busleitung (15) anzusteuern.

10. Kraftfahrzeug (10) nach Anspruch 9, wobei die Busleitung (15) zusätzlich ausgehend von dem Steuergerät (13) des anderen Endes der Daisy-Chain-Verschaltung (14) zu dem Fahrzeugcomputer zurückgeführt ist und der Fahrzeugcomputer (11) eine Kontrollroutine aufweist, die dazu eingerichtet ist, über die Busleitung (15) eine erste Nachricht an das Steuergerät (13) des einen Endes der Daisy-Chain-Verschaltung (14) zu senden und zu überprüfen, ob sich eine durch diese Nachricht ausgelöste zweite Nachricht aus dem Steuergerät (13) des anderen Endes empfangen lässt, und bei Ausbleiben der zweiten Nachricht eine unterbrochene Busleitung (15) zu signalisieren.

11. Steuergerät (13) für ein Kraftfahrzeug (10), wobei das Steuergerät (13) eine Prozessorschaltung (20) und eine Kommunikationsschaltung (16) zum Anschließen an eine Busleitung (15) aufweist und in der Prozessorschaltung (20) des Steuergeräts (13) mehrere vorbestimmte Fahrzeugfunktionen (21) implementiert sind, wobei das Steuergerät dazu eingerichtet ist, dass in dem Kraftfahrzeug (10) mehrere Steuergeräte (13) angeordnet werden, die Fahrzeugfunktionen (21) der Steuergeräte (13) unterschiedlich sind und die mehreren Steuergeräte (13) durch die Busleitung (15) verbunden werden, welche nacheinander durch eine jeweilige Kommunikationsschaltung (16) der Steuergeräte geführt werden und hierdurch die Steuergeräte (13) zu einer Daisy-Chain-Verschaltung (14) hintereinander verschaltet werden,
**dadurch gekennzeichnet, dass**
in dem Steuergerät (13) jede der Fahrzeugfunktionen (21) implementiert ist, und die Prozessorschaltung (20) dazu eingerichtet ist, eine Positionsangabe (34) zu ermitteln, welche eine Position des Steuergeräts (13) innerhalb der durch die Busleitung (15) gebildeten Daisy-Chain-Verschaltung (14) angibt, und in Abhängigkeit von der ermittelten Positionsangabe (34) aus den implementierten Fahrzeugfunktionen (21) eine der Position zugeordnete Fahrzeugfunktion (21) auszuwählen und die ausgewählte Fahrzeugfunktion (21) in dem Kraftfahrzeug (10) für eine Aktivierung anzubieten.

12. Verfahren zum Konfigurieren von Steuergeräten (13) in einem Kraftfahrzeug (10),
damit durch die Steuergeräte (13) eine jeweilige Fahrzeugfunktion (21) bereitgestellt wird, wobei die Fahrzeugfunktionen (21) der Steuergeräte (13) unterschiedlich sind und die Steuergeräte (13) durch eine gemeinsame Busleitung (15) verbunden sind, welche nacheinander durch die Steuergeräte (13) geführt ist und hierdurch die Steuergeräte (13) zu einer Daisy-Chain-Verschaltung (14) hintereinander verschaltet, **dadurch gekennzeichnet, dass**
in jedem der Steuergeräte (13) jede der Fahrzeugfunktionen (21) implementiert ist und in jedem der Steuergeräte (13) eine Prozessorschaltung (20) eine Positionsangabe (34) ermittelt, welche eine Position des jeweiligen Steuergeräts (13) innerhalb der Daisy-Chain-Verschaltung (14) angibt, und in Abhängigkeit von der ermittelten Positionsangabe (34) aus den implementierten Fahrzeugfunktionen (21) eine der Position zugeordnete Fahrzeugfunktion (21) auswählt und die ausgewählte Fahrzeugfunktion (21) im Kraftfahrzeug (10) zur Aktivierung bereitstellt.

## Claims

1. Motor vehicle (10) having a plurality of control units (13) configured to provide a respective vehicle function (21) in the motor vehicle (10), wherein the vehicle functions (21) of the control units (13) are different, and wherein the control units (13) are connected by a common bus line (15) which is guided successively through a respective communication circuit (16) of the control units (13) and thereby interconnects the control units (13) in series to form a daisy-chain interconnection (14),
**characterized in that**
in each of the control units (13)
a) each of the vehicle functions (21) is implemented, and
b) a processor circuit (20) is configured to determine a position indication (34) indicating a position of the respective control unit (13) within the daisy-chain interconnection (14), and, depending on the position indication (34) determined, to select a vehicle function (21) assigned to the position from the implemented vehicle functions (21) and to offer the selected vehicle function (21) for activation in the motor vehicle (10).

2. Motor vehicle (10) according to Claim 1, wherein the bus line (15) in each control unit (13) is interrupted by its communication circuit (16) and is thus separated into bus branches (19), with the result that two bus lines (15) end at each communication circuit (16) or at each communication circuit (16) apart from the last one in the daisy-chain interconnection (14), and each of the control units (13) or each apart from the last of the control units (13) in the daisy-chain interconnection (14) is configured to receive in turn a request message (32) with a position indication (34) in each case by means of the respective communication circuit (16) via one of its bus branches (19), to determine its own position indication (34) on the basis of the received position indication (34), and to send a request message (32) with its own determined position indication (34) to the next control unit (13) in the daisy-chain interconnection (14) by means of its own communication circuit (16) via the other of its bus branches (19).

3. Motor vehicle (10) according to one of the preceding claims, wherein each of the control units (13) is configured to determine, as a position indication (34), a device-specific bus address for bus communication or to form the bus address from the determined position indication (34).

4. Motor vehicle (10) according to Claim 3, wherein the vehicle function (21) comprises using the device-specific bus address for bus communication via the bus line (15).

5. Motor vehicle (10) according to one of the preceding claims, wherein some or all of the control units (13) are structurally identical and/or have the same item numbers and/or model numbers.

6. Motor vehicle (10) according to one of the preceding claims, wherein some or all of the control units (13) are each interconnected to a display module (22) and are configured to control the respective display module (22) by means of the selected vehicle function (21).

7. Motor vehicle (10) according to Claim 6, wherein a plurality of the display modules (22) are assembled in a display device to form a multi-part display having a total display area (29), and the position of the control unit (13) of the respective display module (22) within the daisy-chain interconnection (14) corresponds to a position of the associated display module (22) in the total display area (29).

8. Motor vehicle (10) according to one of the preceding claims, wherein each of the control units (13) has an ASIL and, starting from the first control unit (13) in the daisy-chain interconnection (14), the control units (13) are arranged in descending order according to their ASIL.

9. Motor vehicle (10) according to one of the preceding claims, wherein the control unit (13) of one end of the daisy-chain interconnection (14) is connected, via the bus line (15), to a vehicle computer (11) of the motor vehicle (10), which is configured to control the control units (13) on the basis of their position and/or on the basis of their vehicle function (21) via the bus line (15).

10. Motor vehicle (10) according to Claim 9, wherein the bus line (15) is additionally guided back to the vehicle computer starting from the control unit (13) of the other end of the daisy-chain interconnection (14), and the vehicle computer (11) has a control routine which is configured to send a first message to the control unit (13) of the one end of the daisy-chain interconnection (14) via the bus line (15) and to check whether a second message triggered by this message can be received from the control unit (13) of the other end, and to signal an interrupted bus line (15) if the second message is not received.

11. Control unit (13) for a motor vehicle (10), wherein the control unit (13) has a processor circuit (20) and a communication circuit (16) for connection to a bus line (15) and a plurality of predetermined vehicle functions (21) are implemented in the processor circuit (20) of the control unit (13), wherein the control unit is configured such that a plurality of control units (13) are arranged in the motor vehicle (10), the vehicle functions (21) of the control units (13) are different and the plurality of control units (13) are connected by the bus line (15) which is guided successively through a respective communication circuit (16) of the control units and thus the control units (13) are interconnected in series to form a daisy-chain interconnection (14),
**characterized in that**
each of the vehicle functions (21) is implemented in the control unit (13), and the processor circuit (20) is configured to determine a position indication (34) indicating a position of the control unit (13) within the daisy-chain interconnection (14) formed by the bus line (15), and, depending on the position indication (34) determined, to select a vehicle function (21) assigned to the position from the implemented vehicle functions (21) and to offer the selected vehicle function (21) for activation in the motor vehicle (10).

12. Method for configuring control units (13) in a motor vehicle (10) so that the control units (13) provide a respective vehicle function (21), wherein the vehicle functions (21) of the control units (13) are different and the control units (13) are connected by a common bus line (15) which is guided successively through the control units (13) and thereby interconnects the control units (13) in series to form a daisy-chain interconnection (14),
**characterized in that**
each of the vehicle functions (21) is implemented in each of the control units (13), and a processor circuit (20) in each of the control units (13) determines a position indication (34) indicating a position of the respective control unit (13) within the daisy-chain interconnection (14), and, depending on the position indication (34) determined, selects a vehicle function (21) assigned to the position from the implemented vehicle functions (21) and provides the selected vehicle function (21) for activation in the motor vehicle (10).

## Revendications

1. Véhicule à moteur (10) doté d'une pluralité de dispositifs de commande (13) qui sont conçus pour fournir une fonction particulière de véhicule (21) dans le véhicule à moteur (10), les fonctions de véhicule (21) des dispositifs de commande (13) étant différentes les unes des autres et les dispositifs de commande (13) étant connectés par une ligne de bus commune (15) qui est guidée successivement à travers un circuit de communication (16) respectif des dispositifs de commande (13) et raccorde ainsi les dispositifs de commande (13) successivement en un circuit en guirlande (14),
**caractérisé en ce que**
dans chacun des dispositifs de commande (13)
a) chacune des fonctions de véhicule (21) est mise en œuvre et
b) un circuit processeur (20) est conçu pour déterminer une spécification de position (34) qui spécifie une position du dispositif de commande (13) respectif à l'intérieur du circuit en guirlande (14) et, en fonction de la spécification de position (34) déterminée, pour sélectionner parmi les fonctions de véhicule (21) mises en œuvre une fonction de véhicule (21) attribuée à la position et pour proposer la fonction de véhicule (21) sélectionnée dans le véhicule à moteur (10) en vue d'une activation.

2. Véhicule à moteur (10) selon la revendication 1, dans lequel la ligne de bus (15) est interrompue dans chaque dispositif de commande (13) par son circuit de communication (16) et est ainsi séparée en branches de bus (19), de telle sorte que deux lignes de bus (15) se terminent au niveau de chaque circuit de communication (16) ou au niveau de chaque circuit de communication (16) sauf le dernier du circuit en guirlande (14), et chacun des dispositifs de commande (13) ou chacun des dispositifs de commande (13) sauf le dernier dans le circuit en guirlande (14) est conçu pour recevoir tour à tour, respectivement au moyen du circuit de communication respectif (16) par l'intermédiaire de l'une de ses branches de bus (19), un message d'invitation (32) contenant une spécification de position (34), pour déterminer sa propre spécification de position (34) en fonction de la spécification de position (34) reçue et pour envoyer, au moyen de son propre circuit de communication (16) par l'intermédiaire de l'autre de ses branches de bus (19), un message d'invitation (32) contenant sa propre spécification de position (34) déterminée au dispositif de commande (13) suivant dans le circuit en guirlande (14).

3. Véhicule à moteur (10) selon l'une des revendications précédentes, dans lequel chacun des dispositifs de commande (13) est conçu pour déterminer, en tant que spécification de position (34), une adresse de bus individuelle pour une communication par bus ou pour former l'adresse de bus à partir de la spécification de position (34) déterminée.

4. Véhicule à moteur (10) selon la revendication 3, dans lequel la fonction de véhicule (21) comprend l'utilisation de l'adresse de bus individuelle du dispositif pour une communication par bus par l'intermédiaire de la ligne de bus (15).

5. Véhicule à moteur (10) selon l'une des revendications précédentes, dans lequel certains ou la totalité des dispositifs de commande (13) sont de même structure et/ou possèdent les mêmes numéros de référence et/ou numéros de modèle.

6. Véhicule à moteur (10) selon l'une des revendications précédentes, dans lequel certains ou la totalité des dispositifs de commande (13) sont respectivement connectés à un module d'affichage (22) et sont conçus pour commander le module d'affichage (22) respectif au moyen de la fonction de véhicule (21) sélectionnée.

7. Véhicule à moteur (10) selon la revendication 6, dans lequel plusieurs des modules d'affichage (22) sont assemblés dans un équipement d'affichage pour obtenir un affichage en plusieurs parties, qui comporte une surface d'affichage globale (29), et la position du dispositif de commande (13) du module d'affichage (22) respectif à l'intérieur du circuit en guirlande (14) correspond à une position du module d'affichage (22) associé dans la surface d'affichage totale (29).

8. Véhicule à moteur (10) selon l'une des revendications précédentes, dans lequel chacun des dispositifs de commande (13) comporte un ASIL et, en partant du premier dispositif de commande (13) dans le circuit en guirlande (14), les dispositifs de commande (13) sont disposés par ordre décroissant en fonction de leur ASIL.

9. Véhicule à moteur (10) selon l'une des revendications précédentes, dans lequel le dispositif de commande (13) d'une extrémité du circuit en guirlande (14) est connecté par l'intermédiaire de la ligne de bus (15) à un ordinateur de bord (11) du véhicule à moteur (10), lequel est conçu pour piloter les dispositifs de commande (13) par l'intermédiaire de la ligne de bus (15) en fonction de leur position et/ou en fonction de leur fonction de véhicule (21).

10. Véhicule à moteur (10) selon la revendication 9, dans lequel la ligne de bus (15) est en outre ramenée vers l'ordinateur embarqué en partant du dispositif de commande (13) de l'autre extrémité du circuit en guirlande (14), et l'ordinateur de bord (11) comporte une routine de commande qui est conçue pour envoyer un premier message au dispositif de commande (13) de ladite extrémité du circuit en guirlande (14) par l'intermédiaire de la ligne de bus (15) et pour vérifier si un deuxième message déclenché par ce message peut être reçu en provenance du dispositif de commande (13) de l'autre extrémité, et pour signaler une interruption de la ligne de bus (15) en cas d'absence du deuxième message.

11. Dispositif de commande (13) pour véhicule à moteur (10), le dispositif de commande (13) comportant un circuit processeur (20) et un circuit de communication (16) devant être raccordé à une ligne de bus (15), une pluralité de fonctions de véhicule (21) prédéterminées étant mises en œuvre dans le circuit processeur (20) du dispositif de commande (13), le dispositif de commande étant conçu de telle sorte qu'une pluralité de dispositifs de commande (13) soient disposés dans le véhicule à moteur (10), que les fonctions de véhicule (21) des dispositifs de commande (13) soient différentes les unes des autres et que la pluralité de dispositifs de commande (13) soient connectés par la ligne de bus (15) lesquels sont guidés successivement à travers un circuit de communication (16) respectif des dispositifs de commande et que les dispositifs de commande (13) soient ainsi raccordés successivement en un circuit en guirlande (14),
**caractérisé en ce que**
chacune des fonctions de véhicule (21) est mise en œuvre dans le dispositif de commande (13), et le circuit processeur (20) est conçu pour déterminer une spécification de position (34) qui spécifie une position du dispositif de commande (13) à l'intérieur du circuit en guirlande (14) formé par la ligne de bus (15) et, en fonction de la spécification de position (34) déterminée, pour sélectionner parmi les fonctions de véhicule (21) mises en œuvre une fonction de véhicule (21) attribuée à la position et pour proposer la fonction de véhicule (21) sélectionnée dans le véhicule à moteur (10) en vue d'une activation.

12. Procédé de configuration de dispositifs de commande (13) dans un véhicule à moteur (10), afin qu'une fonction particulière de véhicule (21) soit fournie par les dispositifs de commande (13), les fonctions de véhicule (21) des dispositifs de commande (13) étant différentes les unes des autres et les dispositifs de commande (13) étant connectés par une ligne de bus commune (15) qui est guidée successivement à travers les dispositifs de commande (13) et raccorde ainsi les dispositifs de commande (13) successivement en un circuit en guirlande (14),
**caractérisé en ce que**
chacune des fonctions de véhicule (21) est mise en œuvre dans chacun des dispositifs de commande (13) et un circuit processeur (20) détermine dans chacun des dispositifs de commande (13) une spécification de position (34) qui spécifie une position du dispositif de commande (13) respectif dans le circuit en guirlande (14), et en fonction de la spécification de position (34) déterminée, sélectionne parmi les fonctions de véhicule (21) mises en œuvre une fonction de véhicule (21) attribuée à la position et propose la fonction de véhicule (21) sélectionnée dans le véhicule à moteur (10) en vue d'une activation.
